# EUROPEAN PATENT APPLICATION

(11) **EP 4 718 616 A1**
(43) Date of publication of application: **01.04.2026**
(21) Application number: 25217708.4
(22) Date of filing: 15.10.2024
(51) Int. Cl.: H01M 50/383, H01M 50/244, H01M 50/264, H01M 50/291, H01M 50/293, H01M 50/251

(54) **ENERGY STORAGE SYSTEM**

(30) Priority: 27.11.2023 KR 20230166673
(62) Divisional of application: 24206744.5
(71) Applicant: SAMSUNG SDI CO., LTD., Yongin-si, Gyeonggi-do 17084 (KR)
(72) Inventor: YANG, Jong Woon, 17084 Yongin-si (KR)
(74) Representative: Marks & Clerk LLP

(57) **Abstract**

An energy storage system includes: a rack including horizontal frames arranged at intervals in a vertical direction and having a length in a horizontal direction, vertical frames arranged at intervals in the horizontal direction, having a length in the vertical direction, and coupled to the horizontal frames, and guide rails coupled to inner sides of the horizontal frames and extending in an inward direction of the rack; a battery module mounted on the guide rails; and a fire extinguishing sheet coupled to the horizontal frames. The fire extinguishing sheet is configured to release a fire extinguishing agent to the battery module at a reference temperature.

## Description

### BACKGROUND

### 1. Field

Aspects of embodiments of the present disclosure relate to an energy storage system.

### 2. Description of the Related Art

An energy storage system is a device that includes a large number of battery cells forming a secondary battery to store electrical energy.

Typically, a plurality of battery cells may be stored in a tray, a plurality of the trays may be stored in a rack, and a plurality of the racks may be stored in a container. However, there is a risk of fire in the rack storing the plurality of battery cells. If a fire occurs in one rack, the flame may propagate to an adjacent rack, or the surface temperature of the adjacent rack may greatly increase.

The information disclosed in this section is provided for enhancement of understanding of the background of the present disclosure, and therefore, it may contain information that does not form the related (or prior) art.

### SUMMARY

According to embodiments of the present disclosure, there is a method capable of, in the event of a fire in one rack, suppressing an increase in a surface temperature of an adjacent rack and effectively preventing propagation of the flame to the adjacent rack.

An energy storage system, according to an embodiment of the present disclosure, includes: a rack including horizontal frames arranged at intervals in a vertical direction and having a length in a horizontal direction, vertical frames arranged at intervals in the horizontal direction, having a length in the vertical direction, and coupled to the horizontal frames, and guide rails coupled to inner sides of the horizontal frames and extending in an inward direction of the rack; a battery module mounted on the guide rails; and a fire extinguishing sheet coupled to the horizontal frames. The fire extinguishing sheet is configured to release a fire extinguishing agent to the battery module at a reference temperature.

In one or more embodiments, the fire extinguishing sheet may be coupled to the horizontal frames to face the battery module.

In one or more embodiments, the width of the fire extinguishing sheet may be the same as the width of the horizontal frames.

In one or more embodiments, the width of the fire extinguishing sheet may be greater than the width of the horizontal frames.

In one or more embodiments, the horizontal frames may include a first horizontal frame corresponding to the upper end of the battery module and a second horizontal frame corresponding to the lower end of the battery module.

In one or more embodiments, the fire extinguishing sheet may include a first fire extinguishing sheet coupled to the first horizontal frame and a second fire extinguishing sheet coupled to the second horizontal frame.

In one or more embodiments, the first fire extinguishing sheet and the second fire extinguishing sheet may be spaced apart from each other to allow a cooling fluid to pass therebetween.

In one or more embodiments, the fire extinguishing sheet may be coupled between the first horizontal frame and the second horizontal frame.

In one or more embodiments, the fire extinguishing sheet may have a plurality of through-holes.

In one or more embodiments, each of the plurality of through-holes may have a size in a range of 5 mm to 15 mm.

In one or more embodiments, the fire extinguishing sheet may include a cover formed of a resin and a fire extinguishing agent dispersed inside the cover.

In one or more embodiments, the energy storage system may further include another rack on one side of the rack and spaced apart from the rack. The fire extinguishing sheet may be coupled to one of the horizontal frames facing the other rack.

In one or more embodiments, the energy storage system may further include fire extinguishing conduits coupled to the guide rails and configured to spray a fire extinguishing liquid toward the battery module.

In one or more embodiments, the guide rails may have recesses to accommodate the fire extinguishing conduits therein.

In one or more embodiments, the fire extinguishing conduits may have a length in the horizontal direction.

In one or more embodiments, the battery module may further include a top cover facing the guide rails, and the top cover may be spaced apart from the guide rails.

At least some of the above and other features of the invention are set out in the claims.

### BRIEF DESCRIPTION OF THE DRAWINGS

The accompanying drawings, which are incorporated in this specification, illustrate preferred embodiments and serve to further illustrate the technical ideas of the disclosure in conjunction with the detailed description of embodiments that follows, and the disclosure is not to be construed as limited to what is shown in such drawings. In the drawings:
FIG. 1 is a perspective view of an energy storage system according to an embodiment of the present disclosure;
FIG. 2 is an exploded perspective view of a rack and a fire extinguishing sheet of the energy storage system shown in FIG. 1;
FIG. 3 is a perspective view of a guide rail and a battery module of the energy storage system shown in FIGS. 1 and 2;
FIG. 4 is a partial cross-sectional view taken along the line IV-IV in FIG. 3;
FIG. 5 is a perspective view of a rack of an energy storage system according to another embodiment of the present disclosure; and
FIG. 6 is a perspective view of a rack of an energy storage system according to another embodiment of the present disclosure.

### DETAILED DESCRIPTION

Hereinafter, embodiments of the present disclosure will be described in detail with reference to the accompanying drawings.

Embodiments of the present disclosure are provided to more fully explain the aspects and features of the present disclosure to a person having ordinary skill in the art. Accordingly, the following embodiments may be modified in various other forms, and the scope of the present disclosure is not limited to the following embodiments. The embodiments are provided to make the disclosure more full and complete and to completely convey the aspects and features of the present disclosure to those skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

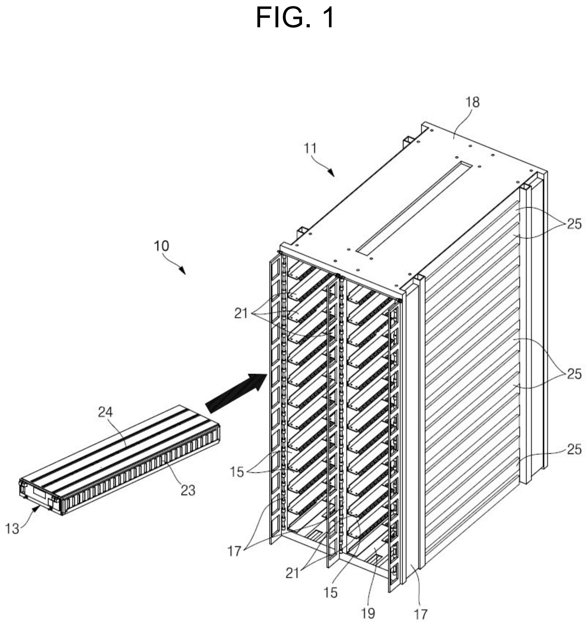

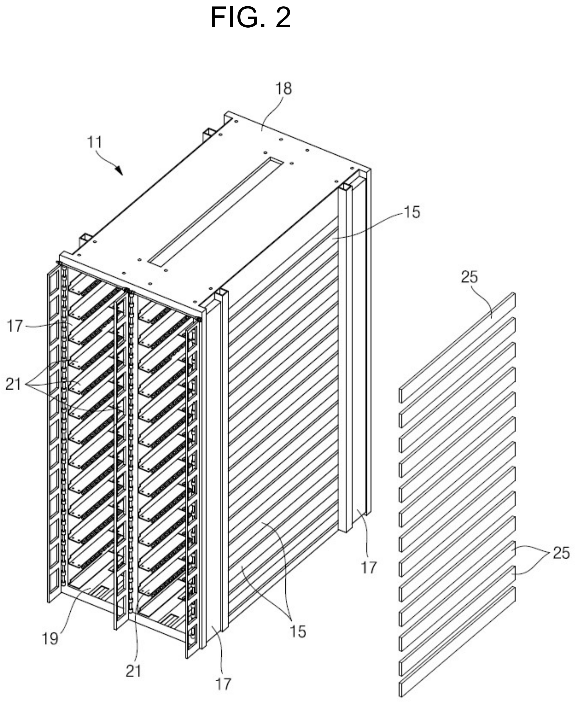

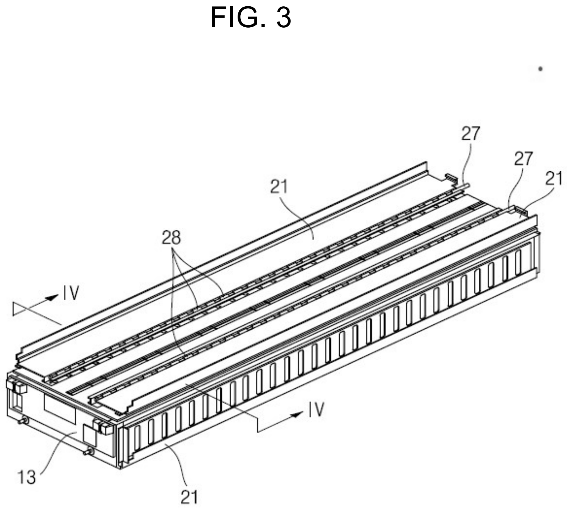

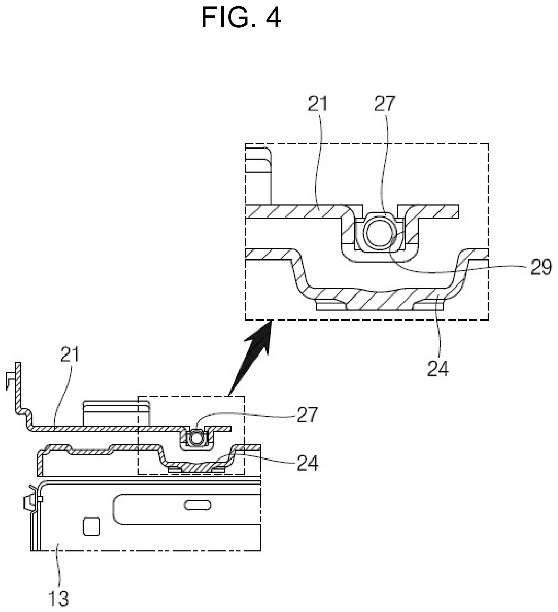

FIG. 1 is a perspective view of an energy storage system according to an embodiment of the present disclosure. FIG. 2 is an exploded perspective view of a rack and a fire extinguishing sheet of the energy storage system shown in FIG. 1. FIG. 3 is a perspective view of a guide rail and a battery module of the energy storage system shown in FIGS. 1 and 2. FIG. 4 is a partial cross-sectional view taken along the line IV-IV in FIG. 3.

FIG. 1 schematically shows an energy storage system 10 according to an embodiment of the present disclosure. The energy storage system 10 may include a rack 11, a battery module 13 and a fire extinguishing sheet 25. The rack 11 may be configured to accommodate one or more battery modules 13. For ease of understanding, one battery module 13 is illustrated in FIG. 1 outside of the rack 11. The battery module 13 may be moved in a direction of the arrow shown in FIG. 1 to be accommodated in (e.g., to be installed in) the rack 11. The rack 11 may be configured to accommodate a plurality of battery modules 13. As shown in FIG. 1, the rack 11 may be configured such that a plurality of battery modules 13 is disposed in two columns therein, and the plurality of battery modules 13 in each column is disposed adjacent to each other in a vertical direction. The number and arrangement of the battery modules 13 accommodated in the rack 11 may vary.

The rack 11 may be a structure formed by assembling a plurality of frames. Referring to FIG. 1, the rack 11 may include a plurality of horizontal frames 15 and a plurality of vertical frames 17. The plurality of horizontal frames 15 may be arranged at intervals in a first direction (e.g., a vertical direction), and each of the horizontal frames 15 may have a length in a second direction perpendicular to the vertical direction (e.g., in a horizontal direction). The plurality of vertical frames 17 may be arranged at intervals in the second direction, and each of the vertical frames 17 may have a length in the first direction. The horizontal frames 15 and the vertical frames 17 may be assembled to (e.g., connected to) each other so that the rack 11 has an approximately rectangular parallelepiped external shape. The horizontal frames 15 and the vertical frames 17 may be coupled to each other by using various fasteners, such as, for example, bolts. As shown in FIG. 1, an upper plate 18 and a lower plate 19 may be coupled to the upper end and the lower end of the assembly of the horizontal frames 15 and the vertical frames 17, respectively.

The rack 11 may include guide rails 21 configured to support the battery modules 13. For example, the guide rails 21 may be coupled to inner sides of the horizontal frames 15 and may be arranged in pairs. Each pair of guide rails 21 may be disposed to face each other to guide insertion of a respective one of the battery modules 13 and to support the inserted battery module 13. The guide rails 21 may extend in an inward direction of the rack 11 (e.g., the direction in which the battery modules 13 are inserted).

The battery modules 13 may be mounted on the guide rails 21. The battery modules 13 may be mounted on the guide rails 21 such that two opposite side end portions of each of the battery modules 13 in the width direction thereof are placed on the upper surfaces of a respective pair of guide rails 12 facing each other.

Each of the battery modules 13 may include a casing 23 defining a space for accommodating batteries (e.g., battery cells) and a plurality of batteries accommodated in the casing 23. The casing 23 may be a tray-shaped structure that accommodates batteries, and a top cover 24 may be coupled to the upper end of the casing 23.

A fire extinguishing sheet 25 may be coupled to the horizontal frame 15. Referring to FIGS. 1 and 2, the fire extinguishing sheet 25 may be coupled to the horizontal frame 15 to cover at least a portion of the space between neighboring horizontal frames 15.

The fire extinguishing sheet 25 may be configured to release a fire extinguishing agent at a reference temperature. The fire extinguishing sheet 25 may contain a fire extinguishing agent and may be configured to undergo phase change and release of the fire extinguishing agent in response to a temperature increase. For example, phase change of the fire extinguishing agent may occur in the fire extinguishing sheet 25 at an ambient temperature in a range of about 40 °C to about 60 °C. If the ambient temperature further increases to be in a range of about 120 °C to about 200 °C, the fire extinguishing agent may be sprayed from (e.g., emitted from) a part of the fire extinguishing sheet 25.

The fire extinguishing sheet 25 may include a cover formed of a resin and a fire extinguishing agent dispersed inside the cover. The cover may be formed of a polyurea resin and/or a polyurethane resin, and the fire extinguishing agent may include, for example, halogenated carbon (e.g., a halogen-containing hydrocarbon compound, such as a compound consisting only of carbon and halogen atoms) such as a halogenated ketone (e.g., 3M's NOVEC 1230). If the fire extinguishing agent is sprayed from the fire extinguishing sheet 25, a flame in the battery module 13 in the rack 11 may be extinguished.

The fire extinguishing sheet 25 may be coupled to the outer side and/or inner side the horizontal frame 15 and may face the mounted battery module(s) 13 to improve the fire extinguishing effectiveness of the fire extinguishing sheet 25.

The width of the fire extinguishing sheet 25 (e.g., the vertical height of the fire extinguishing sheet 25 in FIGS. 1 and 2) may be equal to or greater than the width of the horizontal frame 15 (e.g., the vertical height of the horizontal frame 15 in FIGS. 1 and 2). Thus, the fire extinguishing sheet 25 may cover the area of the horizontal frame 15 in the width direction thereof and at least a portion of the space between neighboring horizontal frames 15 to improve the fire extinguishing effectiveness thereof.

As described above, the energy storage system may include a plurality of racks. If another rack is disposed on one side of the rack 11 shown in FIG. 1 while being spaced apart therefrom, the fire extinguishing sheet 25 may be coupled to the horizontal frame 15 that faces the other (e.g., the adjacent) rack to more effectively prevent propagation of flame from one rack to another, adjacent rack.

Referring to FIGS. 3 and 4, the battery module 13 (e.g., each battery module 13) may have a fire extinguishing conduit 27 configured to spray a fire extinguishing liquid. The guide rail 21 may have a recess 29 formed therein to receive the fire extinguishing conduit 27 therein. The fire extinguishing conduit 27 may spray a fire extinguishing liquid toward the battery module 13 mounted on the guide rail 21 while flowing through the recess 29. The fire extinguishing conduit 27 may be a pipe member that has a length in the second direction and is configured to allow the fire extinguishing liquid to flow therethrough. The fire extinguishing conduit 27 may be configured to spray the fire extinguishing liquid through spray holes 28 (e.g., spray openings) formed therein.

Referring to FIG. 4, the top cover 24 of the battery module 13 may face the battery module 13 disposed thereabove and may be spaced apart from the guide rail 21 disposed directly thereabove. Thus, an empty space (e.g., a gap) may be defined between the top cover 24 and the lower surface of the guide rail 21 disposed thereabove.

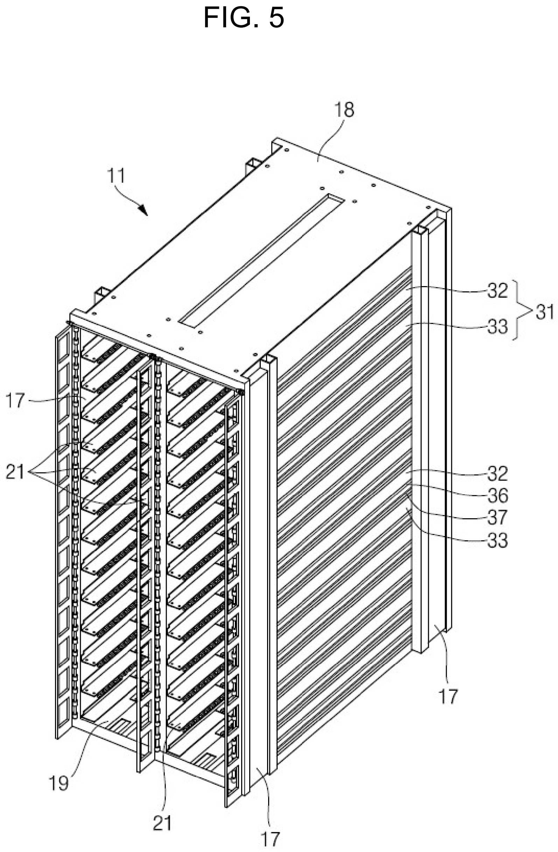

FIG. 5 is a perspective view of a rack of an energy storage system according to another embodiment of the present disclosure to which a fire extinguishing sheet is mounted. Hereinafter, an energy storage system according to another embodiment of the present disclosure will be described with reference to FIG. 5. Description of parts and configurations that are identical or substantial similar to those of the above-described embodiment will be omitted or only briefly repeated.

Referring to FIG. 5, a horizontal frame 31 may include a first horizontal frame 32 corresponding to the upper end of the battery module and a second horizontal frame 33 corresponding to the lower end of the battery module. For example, the first horizontal frame 32 may be disposed above the second horizontal frame 33, and the battery module may be disposed between the first horizontal frame 32 and the second horizontal frame 33 in the vertical direction. A fire extinguishing sheet may include a first fire extinguishing sheet 36 coupled to the first horizontal frame 32 and a second fire extinguishing sheet 37 coupled to the second horizontal frame 33. The first fire extinguishing sheet 36 and the second fire extinguishing sheet 37 may be spaced apart from each other to allow a cooling fluid to pass therebetween. This configuration may allow for the cooling fluid to flow through the gap between the first and second fire extinguishing sheets 36 and 37 and to ensure stable flow of the cooling fluid despite the mounting of the fire extinguishing sheets 36 and 37.

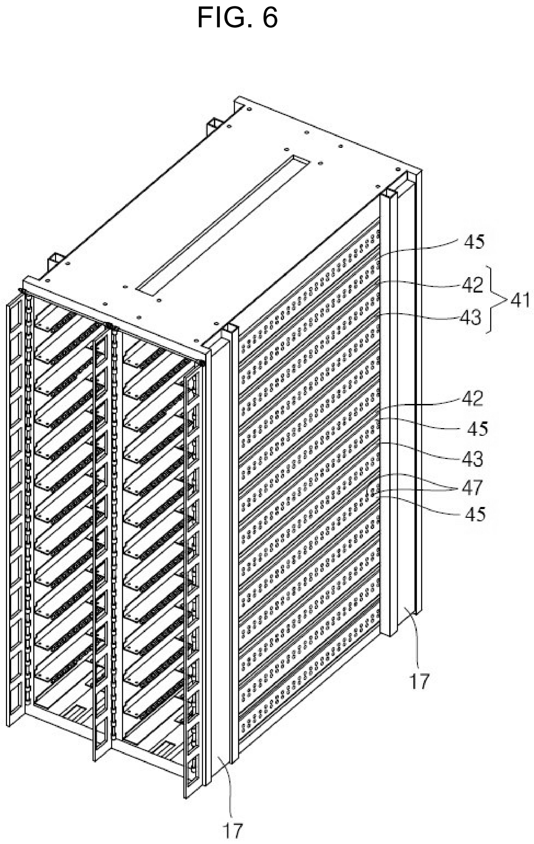

FIG. 6 is a perspective view of a rack of an energy storage system according to another embodiment of the present disclosure to which a fire extinguishing sheet is mounted. Hereinafter, an energy storage system according to another embodiment of the present disclosure will be described with reference to FIG. 6. Description of parts and configurations that are identical or substantially similar to those of the above-described embodiments will be omitted or only briefly repeated.

Referring to FIG. 6, a horizontal frame 41 may include a first horizontal frame 42 corresponding to the upper end of the battery module and a second horizontal frame 43 corresponding to the lower end of the battery module. For example, the first horizontal frame 42 may be disposed above the second horizontal frame 43, and the battery module may be disposed between the first horizontal frame 42 and the second horizontal frame 43 in the vertical direction. A fire extinguishing sheet 45 may be coupled between the first horizontal frame 42 and the second horizontal frame 43. For example, the fire extinguishing sheet 45 may be located to cover at least a portion of the area between the first horizontal frame 42 and the second horizontal frame 43. The fire extinguishing sheet 45 may have a plurality of through-holes (e.g., openings) 47 formed therein. The through-holes 47 may act as passages through which a cooling fluid passes. For example, the through-holes 47 may have a size in a range from about 5 mm to about 15 mm. For example, the through-holes 47 may have a circular shape having a diameter in a range from about 5 mm to about 15 mm.

As is apparent from the above description, according to embodiments of the present disclosure, a fire extinguishing sheet is mounted to a rack accommodating battery modules. Thus, in the event of a fire in one rack, an increase in the surface temperature of an adjacent rack may be suppressed and propagation of the flame to the adjacent rack may be effectively prevented.

The above is only some embodiments for implementing an energy storage system according to the present disclosure, the present disclosure is not limited thereto. It is to be understood by those skilled in the art that various modifications can be made without departing from the gist of the present disclosure as described in the following claims and their equivalents.

### CLAUSES

Clause 1. An energy storage system comprising:
a rack comprising:
   horizontal frames arranged at intervals in a vertical direction and having a length in a horizontal direction;
   vertical frames arranged at intervals in the horizontal direction, having a length in the vertical direction, and coupled to the horizontal frames; and
   guide rails coupled to inner sides of the horizontal frames and extending in an inward direction of the rack;
a battery module mounted on the guide rails; and
a fire extinguishing sheet coupled to the horizontal frames, the fire extinguishing sheet being configured to release a fire extinguishing agent to the battery module at a reference temperature.

Clause 2. The energy storage system of Clause 1, wherein the fire extinguishing sheet is coupled to the horizontal frames to face the battery module.

Clause 3. The energy storage system of Clause 1 or Clause 2, wherein a width of the fire extinguishing sheet is the same as a width of the horizontal frames.

Clause 4. The energy storage system of Clause 1 or Clause 2, wherein a width of the fire extinguishing sheet is greater than a width of the horizontal frames.

Clause 5. The energy storage system of Clause 1, wherein the horizontal frames comprise:
a first horizontal frame corresponding to an upper end of the battery module; and
a second horizontal frame corresponding to a lower end of the battery module.

Clause 6. The energy storage system of Clause 5, wherein the fire extinguishing sheet comprises:
a first fire extinguishing sheet coupled to the first horizontal frame; and
a second fire extinguishing sheet coupled to the second horizontal frame.

Clause 7. The energy storage system of Clause 6, wherein the first fire extinguishing sheet and the second fire extinguishing sheet are spaced apart from each other to allow a cooling fluid to pass therebetween.

Clause 8. The energy storage system of Clause 5, wherein the fire extinguishing sheet is coupled between the first horizontal frame and the second horizontal frame.

Clause 9. The energy storage system of Clause 8, wherein the fire extinguishing sheet has a plurality of through-holes.

Clause 10. The energy storage system of Clause 9, wherein each of the plurality of through-holes has a size in a range of 5 mm to 15 mm.

Clause 11. The energy storage system of any one of Clauses 1 to 10, wherein the fire extinguishing sheet comprises:
a cover formed of a resin; and
a fire extinguishing agent dispersed inside the cover.

Clause 12. The energy storage system of any one of Clauses 1 to 11, further comprising another rack on one side of the rack and spaced apart from the rack,
wherein the fire extinguishing sheet is coupled to one of the horizontal frames facing the other rack.

Clause 13. The energy storage system of any one of Clauses 1 to 12, further comprising fire extinguishing conduits coupled to the guide rails, the fire extinguishing conduits being configured to spray a fire extinguishing liquid toward the battery module.

Clause 14. The energy storage system of Clause 13, wherein:
(i) the guide rails has recesses to accommodate the fire extinguishing conduits therein; and/or
(ii) the fire extinguishing conduits have a length in the horizontal direction.

Clause 15. The energy storage system of any one of Clauses 1 to 14, wherein the battery module further comprises a top cover facing the guide rails, and
wherein the top cover is spaced apart from the guide rails.

## Claims

1. A battery system (10) comprising:
a rack (11) comprising:
first frames (15, 31, 41, 32, 33, 42, 43) arranged at intervals in a first direction and having a length in a second direction;
second frames (17) arranged at intervals in the second direction, having a length in the first direction, and coupled to the first frames; and
guide rails (21) coupled to inner sides of the first frames and extending in an inward direction of the rack (11);
a battery module (13) mounted on the guide rails (21);
a fire extinguishing sheet (25, 36, 37, 45) coupled to the first frames (15, 31, 41, 32, 33, 42, 43), the fire extinguishing sheet (25, 36, 37, 45) being configured to release a fire extinguishing agent to the battery module (13) at a reference temperature; and
fire extinguishing conduits (27) coupled to the guide rails (21), the fire extinguishing conduits (27) being configured to spray a fire extinguishing liquid toward the battery module (13).

2. The battery system (10) as claimed in claim 1, wherein the fire extinguishing sheet (25, 36, 37, 45) is coupled to the first frames (15, 31, 41, 32, 33, 42, 43) to face the battery module (13).

3. The battery system (10) as claimed in claim 1 or claim 2, wherein a width of the fire extinguishing sheet (25, 36, 37, 45) is the same as a width of the first frames (15, 31, 41, 32, 33, 42, 43).

4. The battery system (10) as claimed in claim 1 or claim 2, wherein a width of the fire extinguishing sheet (25, 36, 37, 45) is greater than a width of the first frames (15, 31, 41, 32, 33, 42, 43).

5. The battery system (10) as claimed in claim 1, wherein the first frames comprise:
a first frame (32, 42) of the first frames corresponding to an upper end of the battery module (13); and
a second frame (33, 43) of the first frames corresponding to a lower end of the battery module (13).

6. The battery system (10) as claimed in claim 5, wherein the fire extinguishing sheet comprises:
a first fire extinguishing sheet (36) coupled to the first frame (32, 42) of the first frames; and
a second fire extinguishing sheet (37) coupled to the second frame (33, 43) of the first frames.

7. The battery system (10) as claimed in claim 6, wherein the first fire extinguishing sheet (36) and the second fire extinguishing sheet (37) are spaced apart from each other to allow a cooling fluid to pass therebetween.

8. The battery system (10) as claimed in claim 5, wherein the fire extinguishing sheet (45) is coupled between the first frame (42) of the first frames and the second frame (43) of the first frames.

9. The battery system (10) as claimed in claim 8, wherein the fire extinguishing sheet (45) has a plurality of through-holes (47).

10. The battery system (10) as claimed in claim 9, wherein each of the plurality of through-holes (47) has a size in a range of 5 mm to 15 mm.

11. The battery system (10) as claimed in any one of claims 1 to 10, wherein the fire extinguishing sheet (25, 36, 37, 45) comprises:
a cover formed of a resin; and
a fire extinguishing agent dispersed inside the cover.

12. The battery system (10) as claimed in any one of claims 1 to 11, further comprising another rack on one side of the rack (11) and spaced apart from the rack (11),
wherein the fire extinguishing sheet (25, 36, 37, 45) is coupled to one of the first frames (15, 31, 41, 32, 33, 42, 43) facing the other rack.

13. The battery system (10) as claimed in any one of claims 1 to 12, wherein:
(i) the guide rails (21) has recesses (29) to accommodate the fire extinguishing conduits (27) therein; and/or
(ii) the fire extinguishing conduits (27) have a length in the second direction.

14. The battery system (10) as claimed in any one of claims 1 to 13, wherein the battery module (13) further comprises a top cover (24) facing the guide rails (21), and
wherein the top cover (24) is spaced apart from the guide rails (21).

15. The battery system (10) as claimed in any one of claims 1 to 13, wherein the fire extinguishing sheet (25) sprays the fire extinguishing agent at a temperature of about 120 °C to about 200 °C.
